Europäisches Patentamt

European Patent Office

Office européen des brevets

(11) Veröffentlichungsnummer: **0 307 647**

**A1**

(12) # EUROPÄISCHE PATENTANMELDUNG

(21) Anmeldenummer: **88113472.0**

(22) Anmeldetag: **19.08.88**

(51) Int. Cl.4: **E04D 5/14 , E04D 3/36 , E04F 13/08**

(30) Priorität: **17.09.87 AT 2352/87**

(43) Veröffentlichungstag der Anmeldung:
**22.03.89 Patentblatt 89/12**

(84) Benannte Vertragsstaaten:
**DE FR GB**

(71) Anmelder: **SFS Stadler AG.**
**Nefenstrasse 30**
**CH-9435 Heerbrugg(CH)**

(72) Erfinder: **Bögel, Gerhard, Dipl.-Ing.**
**Weinbergstrasse 8**
**CH-9436 Balgach(CH)**

(74) Vertreter: **Hefel, Herbert, Dipl.-Ing.**
**Egelseestrasse 65a**
**A-6800 Feldkirch-Tosters(AT)**

(54) **Unterlegscheibe.**

(57) Bei einer Unterlegscheibe (5) ist eine mittige Durchgangsöffnung (10) zur Aufnahme einer Schraube vorgesehen. Diese großflächige Unterlegscheibe (5) weist einen ebenen, umfangsgeschlossen verlaufenden Randbereich (8) auf, an den ein konvex gewölbter Abschnitt (9) anschließt. Die mittige Durchgangsöffnung (10) ist von einer konisch sich verjüngenden bzw. ein- oder mehrfach abgestuften Wand (11) begrenzt. Solche Unterlegscheiben dienen zur Befestigung von Teilen an einem Unterbau, insbesondere zur Befestigung ein- oder mehrschichtiger Dachbahnen mit Isolierschicht auf einem festen Unterbau.

EP 0 307 647 A1

Fig.3

## Unterlegscheibe

Die Erfindung betrifft eine Unterlegscheibe mit einer mittigen Durchgangsöffnung zur Aufnahme einer Schraube, insbesondere zur Befestigung ein- oder mehrschichtiger Dachbahnen samt einer Isolierschicht auf einem festen Unterbau.

Es ist bereits eine Vorrichtung zum Befestigen von Dachbahnen auf weichem Isoliermaterial an einer festen Unterlage bekanntgeworden, bei der großflächige Unterlegscheiben eingesetzt werden, welche mit einer selbstbohrenden und - gewindeschneidenden Schraube angepreßt werden (AT-PS 380 051). Bei einer solchen Unterlegscheibe ist an einem ebenen Hauptteil eine mittige Einbuchtung zur Aufnahme des Schraubenkopfes vorgesehen, wobei am Boden dieser Einbuchtung die Durchtrittsöffnung für die Schraube angeordnet ist. Eine solcherart ausgebildete Unterlegscheibe ist nur bei relativ weichem, nachgiebigem Material möglich, welches an einem festen Unterbau befestigt werden muß. Die mittige Einbuchtung der Unterlegscheibe muß nämlich in den zu befestigenden Teil eingedrückt werden können.

Ferner sind Befestigungsanordnungen bekannt, bei welchen eine Unterlegscheibe aus einem nachgiebigen Kunststoff eingesetzt wird (CH-PS 612 718 oder DE-OS 35 00 084). Bei solchen Anordnungen sind die relativ weit ausladenden Randbereiche bei entsprechend großflächiger Ausbildung zu schwach, um eine entsprechenden Antriebskraft ausüben zu können oder aber es ist notwendig, radial von der mittigen Durchgangsöffnung nach außen führende Rippen an der Unterseite oder der Oberseite der Unterlegscheiben anzuordnen. Dies bringt aber wiederum wesentliche Probleme bei der Magazinierung der Unterlegscheiben mit sich. Gerade bei einer Serienbefestigung auf einem Dach ist es sehr wesentlich, daß sowohl die Schrauben als auch die Unterlegscheiben in magazinierter Form der Schraubvorrichtung zugeführt und von dieser vereinzelt werden können. Eine solche Möglichkeit ist aber auch dann bereits ausgeschlossen, wenn an der Unterlegscheibe selbst relativ weit nach unten abragende rohrförmige Teile zur Aufnahme und Halterung der Schraubenschaftes vorgesehen sind.

Bei einer anderen bekannten Ausgestaltung (DE-GM 78 12 641) ist eine ebene Unterlegscheibe vorgesehen, bei welcher koaxial zur mittigen Durchgangsöffnung zur Aufnahme der Schraube ringförmig verlaufende Sicken vorgesehen sind. Auch eine solche Ausbildung einer Unterlegscheibe eignet sich nicht zur Magazinierung und zur automatischen Vereinzelung in einem Schraubautomaten, da durch die querliegenden Rippen ständige Störungen auftreten würden. Das gleiche gilt auch für Unterlegscheiben (FR-PS 1 362 380), bei welchen von er ebenen Unterlegscheibe nach unten in Richtung des zu befestigenden Materials abstehende Spitzen vorgesehen sind. Auch bei einer solchen Ausführung ist nur eine Einzelhand-Zuführung und somit auch das Einsetzen des Befestigers von Hand möglich.

Auch bei einer weiteren bekannten Anordnung (DE-OS 31 37 836) ist eine Unterlegscheibe aus Kunststoff vorgesehen, welche einen relativ weit an der Unterseite vorstehenden, zylinderförmigen Teil zur Aufnahme und Führung der Schraube aufweist. Auch bei dieser Anordnung müssen zur Erreichung der notwendigen Stabilität an der Unterseite der Unterlegscheibe Rippen vorgesehen werden, die eine Vereinzelung in einem Schraubautomaten verhindern. Dies gilt auch für eine Ausführung gemäß der DE-OS 31 06 844.

Auch bei Unterlegscheiben, an welchen relativ lange, rohrförmige Körper zur verschiebbaren Halterung des Schraubenschaftes und des Schraubenkopfes vorgesehen sind, eignen sich nicht für eine Vormagazinierung (GB-PS 1 499 224). Auch bei solchen Unterlegscheiben könnte nur dann eine ordnungsgemäße, lastverteilende Anpreßkraft erzielt werden, wenn die Unterlegscheibe selbst mit Rippen ausgestattet würde.

Die vorliegende Erfindung hat sich daher zur Aufgabe gestellt, eine Unterlegscheibe der eingangs genannten Art zu schaffen, welche eine ausreichende Versteifung auch ohne Anordnung von Rippen aufweist und für die Befestigung sowohl fester Verkleidungsteile als auch nachgiebiger Dachbahnteile geeignet ist. Ferner soll eine Ausführung einer Unterlegscheibe geschaffen werden, die in einfacher und störungsfreier Weise vormagaziniert und durch einen Schraubautomaten vereinzelt werden kann.

Erfindungsgemäß gelingt dies dadurch, daß sie umlaufend - wie an sich bekannt - einen ebenen Randbereich (8) aufweist, an den ein nach oben konvex gewölbter Abschnitt mit der mittigen Durchgangsöffnung anschließt, welche von einer konische sich verjüngenden oder ein- oder mehrfach abgestuften Wand begrenzt ist.

Durch den konvex gewölbten Abschnitt der Unterlegscheibe wird eine ausreichende Festigkeit und Versteifung erzielt, ohne daß Rippen angeordnet werden müssen. An der Oberseite der Unterlegscheiben entstehend daher keinerlei Senken, die Lösungsmittel, die bei der Folien-Dachbahnverschweißung entstehen, aufnehmen können.

Gerade bei einer Heißluftverschweißung von Folien auf einem Dach weist die Unterlegscheibe einen ebenen Randbereich auf, läuft also zum Rand hin flach aus. Es ergibt sich dadurch keine Klaffung der Dachbahn beim Verschweißen.

Bei relativ weicher Isolation, die beim Schraubvorgang etwas zusammengedrückt wird, füllt die erfindungsgemäße Unterlegscheibe durch den konvex gewölbten Abschnitt zum Teil die entstandene Vertiefung.

Vorteilhaft ist ferner die Querbeweglichkeit der erfindungsgemäßen Unterlegscheibe bei einer Saumbefestigung bei Dachbahnen. Durch den ebenen Randbereich wird im Bereich der Saumbefestigung der Unterlegscheibe als Sekundärrückhalt aktiv.

Die die mittige Durchgangsöffnung begrenzende Wand schließt an der Unterseite mit dem Niveau des aufliegenden Randbereich ab bzw. liegt über diesem, so daß auch direkt auf Holz ohne Einsenkung gearbeitet werden kann. Auch bei Renovierungsarbeiten auf Dächern mit mehrlagiger Bitumendachbahn ergeben sich dadurch auch bei kalter Witterung keine Schwierigkeiten, da keine Eindringen eines vertieften Bereiches der Unterlegscheibe in das relativ harte Material notwendig ist.

Durch die erfindungsgemäße Ausgestaltung der Unterlegscheibe ist diese in optimaler Form für die Magazinierung geeignet, kann also in Stapeln einem Schraubautomaten zugeführt werden und es ist daher auch in einfacher Weise möglich, in diesem Verschraubautomaten die Unterlegscheiben zu vereinzeln und für die Verschraubung bereitzustellen. Es sind keine die Vereinzelung verhindernden bzw. zumindest erschwerenden Rippen vorhanden.

Gemäß einem weiteren Merkmal ist vorgesehen, daß der ebene Randbereich und der untere freie Rand der die Durchgangsöffnung einschließenden Wand in einer Ebene liegen. Eine solche Ausführung ist insbesondere bei der Befestigung von unnachgiebigen Teilen, also beispielsweise für die Direktbefestigung von Holz oder dgl. vorteilhaft.

Weiters wird vorgeschlagen, daß der untere, freie Rand der die Durchgangsöffnung einschließenden Wand oberhalb der vom ebenen Randbereich gebildeten Anlageebene liegt. Es ist dann auf jeden Fall sichergestellt, daß dieser Rand niemals unter die Anlageebene des ebenen Randbereiches nach unten vorsteht, so daß die Magazinierung und Vereinzelung der Unterlegscheiben wesentlich verbessert wird und ferner nie ein vorstehender Bereich vorhanden ist, der in den Untergrund eingedrückt werden müßte, bevor der umlaufende Randbereich zur Anlage kommt.

Ein weiteres Merkmal liegt darin, daß der Querschnitt des nach oben konvex gewölbten Abschnittes die Form eines Kreisbogenabschnittes besitzt. Dieser gibt eine einfache Fertigung und somit auch eine einfache Fertigung der dazu erforderlichen Werkzeuge.

Je nach Belastungsfall ist es aber auch möglich, daß der Querschnitt des nach oben konvex gewölbten Anschnittes die Form eines Ellipsen-, Parabel- oder Hyperbelbogenabschnittes aufweist.

Weiters wird vorgeschlagen, daß der Querschnitt der von der Wand begrenzten Durchgangsöffnung der Kopfform der einzusetzenden Schraube entsprechend aufgeführt ist. Es ist dadurch eine ausgezeichnete reibungschlüssige Verbindung zwischen der Schraube und der Unterlegscheibe gewährleistet.

Wenn sich ferner die die Durchgangsöffnung begrezende Wand konisch mit einem Öffnungswinkel von 10 - 30°, vorzugsweise 20° in Einschraubrichtung verjüngt, ist die Ausführung in besonderer Weise für den direkten Einsatz von Schraubköpfen, aber auch für den Einsatz von Zwischenhülsen geeignet. Bei weiterem Eindrehen der Schraube gelangt der Kopf derselben in den immer weiter sich verjüngenden Bereich der Durchgangsöffnung, so daß sich die gegenseitige Reibung ständig erhöht. Es ist dadurch eine zusätzliche Losdrehsicherheit gegeben.

Wenn sich die die Durchgangsöffnung begrenzende Wand konsich mit einem Öff nungswinkel von annähernd 90° in Einschraubrichtung verjüngt, ergibt sich eine optimale Möglichkeit zum Einsatz einer Senkkopfschraube.

Weiters wird vorgeschlagen, daß die abgestufte, die Durchgangsöffnung begrenzende Wand aus einem - in Einschraubrichtung gesehen - ersten Abschnitt mit drei- oder mehreckiger oder unrunder Querschnittsform und einem zweiten Abschnitt mit kreisförmiger Querschnittsform ausgeführt ist. Bei einer solchen Ausgestaltung kann beispielsweise ein in Draufsicht quadratischer Schraubenkopf eingesetzt werden. Es wird dadurch eine formschlüssige Verbindung zwischen Schraube und Unterlegscheibe geschaffen, so daß die Losdrehkraft wesentlich erhöht wird.

Eine vorteilhafte Ausführung liegt darin, wenn die Unterlegscheibe als streifenförmiger Bauteil mit beidendigem, halbkreisförmigem Abschluß ausführt ist, wobei der Radius des konvex gewölbten Abschnittes in allen durch die Einschraubachse geführten Schnittebenen gleichbleibend ist. Dadurch ergibt sich nicht nur eine einfache Ausgestaltung des Werkzeuges, sondern auch eine optimale Stabilität der Unterlegscheibe in ihrem konvex gewölbten Abschnitt.

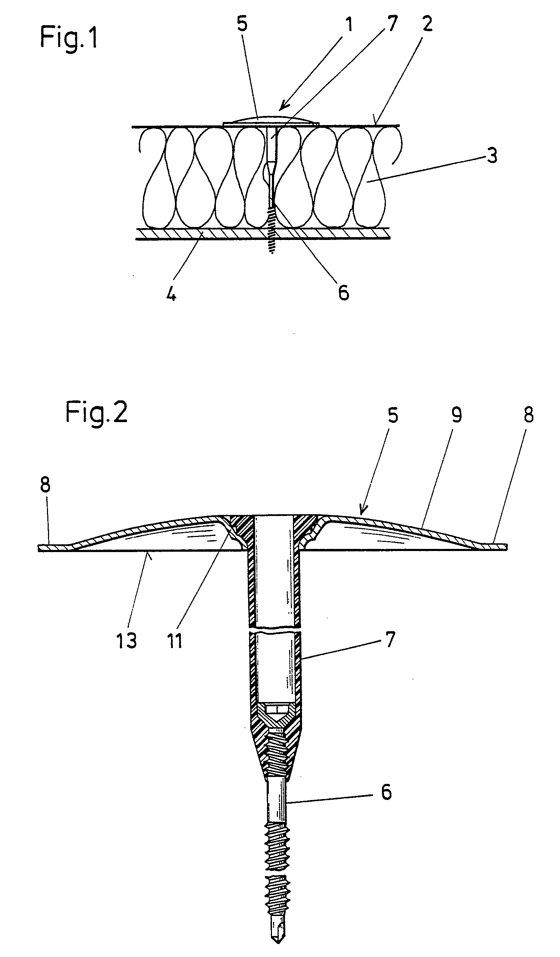

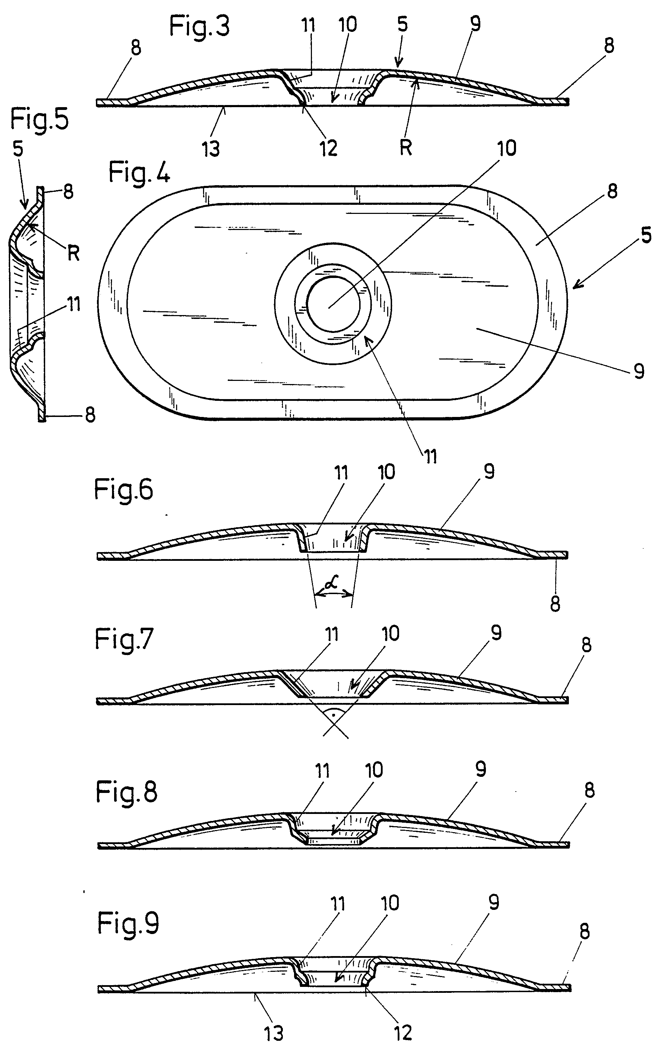

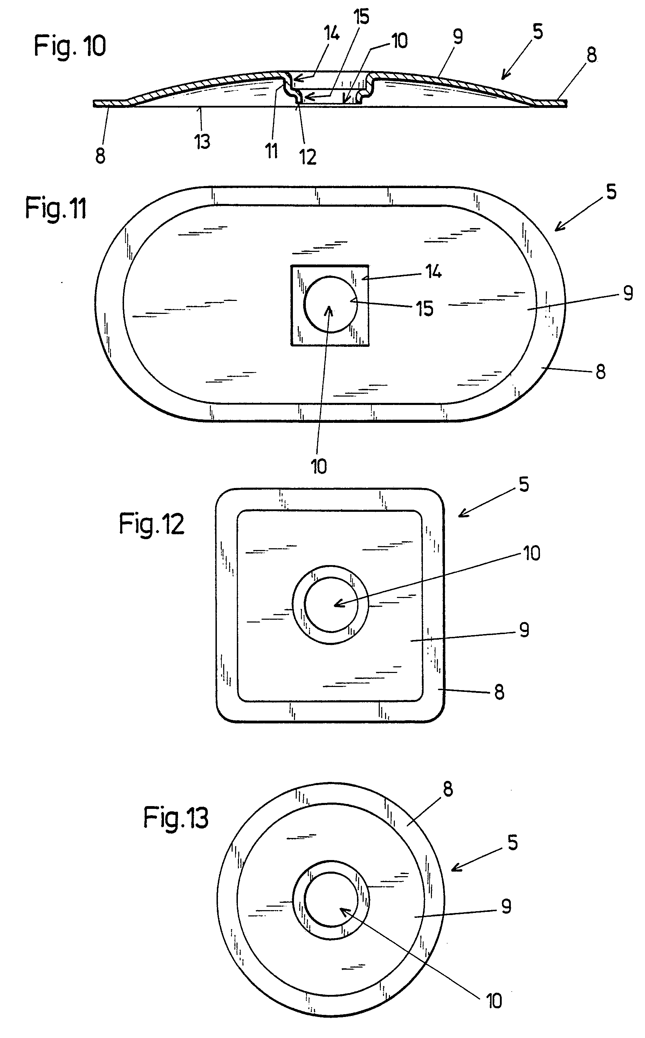

Weitere erfindungsgemäße Merkmale und besondere Vorteile werden in der nachstehenden Beschreibung anhand der Zeichnung noch näher erläutert. Es zeigen: Fig. 1 einen Schnitt durch ein Befestigungsbeispiel mit der erfindungsgemäßen Unterlegscheibe; Fig. 2 ein Einsatzbeispiel gemäß Fig. 1, wobei die Unterlegscheibe, eine Zwischenhülse und die Schraube teilweise im Schnitt dargestellt sind; die Fig. 3 bis 5 zwei Schnitte sowie eine Draufsicht auf eine Unterlegscheibe gemäß Fig. 2; die Fig. 6 bis 9 verschiedene Querschnittsformen von Unterlegscheiben; die Fig. 10 und 11 einen Schnitt sowie eine Draufsicht auf eine besondere Ausführungsform einer Unterlegscheibe; die Fig. 12 und 13 zwei weitere, auf die Ausführungsformen nach den Fig. 3 bis 11 zutreffenden Draufsichtsformen von Unterlegscheiben.

In Fig. 1 ist ein Einsatzbeispiel einer erfindungsgemäßen Unterlegscheibe gezeigt. Ein Befestigungselement 1 dient zur Fixierung ein- oder mehrschichtiger Dachbahnen 2 mit einer Isolierschicht 3 auf einem festen Unterbau 4. Das Befestigungselement 1 besteht dabei aus einer Unterlegscheibe 5, einer Schraube 6 sowie einer zwischen Unterlegscheibe 5 und Schraube 6 angeordneten Zwischenhül se 7. Anstelle der Zwischenhülse 7 kann auch direkt der Kopf der Schraube 6 an der Oberseite der Unterlegscheibe 5 in einer entsprechenden Vertiefung eingreifen. In Fig. 2 ist diese Art des Befestigungselementes gemäß Fig. 1 vergrößert und im Schnitt dargestellt.

Der Einsatzbereich der erfindungsgemäßen Unterlegscheibe ist aber nicht nur auf die Befestigung ein- oder mehrschichtiger Dachbahnen mit Isolierschicht auf einem festen Unterbau beschränkt, sondern kann zur Befestigung von Teilen jeer Art an einem Unterbau eingesetzt werden, also auch zur Befestigung von Verkleidungsplatten oder dgl. an Wänden usw.

Eine besondere Ausführungsform der erfindungsgemäßen Unterlegscheibe ist den Fig. 3 bis 5 zu entnehmen. Die Unterlegscheibe 5 weist umfangsgeschlossen einen ebenen Randbereich 8 auf und ist an diesen Randbereich anschließend mit einem konvex gewülbten Abschnitt 9 ausgeführt.

Die mittige Durchgangsöffnung 10 ist von einer konisch sich verjüngenden oder ein- oder mehrfach abgestuften Wand 11 begrenzt. Der konische oder abgestufte Verlauf der Wand 11 ist dem einzusetzenden Zwischenstück 7 bzw. der Kopfform der einzusetzenden Schraube angepaßt.

Besonders vorteilhaft ist es, daß der ebene Randbereich 8 der Unterlegscheibe 5 umfangsgeschlossen in einer Ebene liegt. Dadurch ist eine einfache Querbeweglichkeit bei einer Saumbefestigung bei Dachbahnen möglich und auch bei einer Heißluftverschweißung wirkt sich dies positiv aus.

Der Randbereich 8 und der untere Rand 12 der Wand 11 liegen in der gleichen Ebene 13. Eine solche Ausführung ist insbesondere bei der Befestigung von unnachgiebigen Teilen, also beispielsweise für die Direktbefestigung von Holz oder dgl. vorteilhaft. Aber auch für die Befestigung von nachgiebigem Material wirkt sich diese Ausführung positiv aus, da ja durch den umlaufenden Randbereich 8 die Anpreßkraft der Unterlegscheibe großflächig übertragen wird und sich die Unterlegscheibe durch den konvex gewölbten Abschnitt 9 nicht in sich zusammendrücken läßt. Bei der Ausführung nach den Fig. 3 bs 5 könnte ebenso wie bei den nachfolgenden Ausführungsbeispielen nach den Fig. 6 bis 10 der untere Rand 12 der Wand 11 oberhalb der Anlageebene 13 des Randabschnittes 8 lie gen. Auf jeden Fall ist bei allen Ausführungsbeispielen vorgesehen, daß dieser untere Rand 12 nicht unterhalb dieser Anlageebene 13 zu liegen kommt, da dadurch einerseits die Magazinierung und Vereinzelung der Unterlegscheibe wesentlich verbessert wird und andererseits nie ein vorstehender Bereich vorhanden ist, der in den Untergrund eingedrückt werden müßte, bevor der umlaufende Randbereich 8 zur Anlage kommt.

Der konvex gewölbte Abschnitt 9 der Unterlegscheibe weist zweckmäßig im Querschnitt der Form eines Kreisbogenabschnittes auf, wobei der Radius R des konvex gewölbten Abschnitt 9 in allen durch die Einschraubachse, also die Mittelachse der Durchgangsöffnungg geführten Schnittebenen gleichbleibend ist. Dies ist gerade bei einer Ausführungsform nach Fig. 4 von Bedeutung, da hier die Unterlegscheibe als streifenförmiger Bauteil mit beidendigem, halbkreisförmigem Abschluß ausgeführt ist. Obwohl also die Steilheit des Bereiches zwischen den Randbereichen 8 und der mittigen Durchgangsöffnungg 10 stetig im Umfangsrichtung um die Durchgangsöffnung 120 ändert, bleibt doch der Radius R der gleiche.

Im Rahmen der Erfindung wäre es auch möglich, daß der konvex gewölbte Abschnitt die Form eines Ellipsen-, Parabel- oder Hyperbelbogenabschnittes aufweist.

Die Ausführung nach Fig. 6 unterscheidet sich gegenüber dem Beispiel nach Fig. 3 lediglich dadurch, daß die Wand 11 der Durchgangsöffnung 10 sich in Einschraubrichtung der einzusetzenden Schraube verjüngt. Die Wand 11 schließt eine konische Durchgangsöffnung mit einem Öffnungswinkel von 10 bis 30$^{\circ}$, vorzugsweise von 20$^{\circ}$, ein. eine solche Ausführung ist in besonderer Weise für den direkten Einsatz von Schraubenköpfen aber auch für den Einsatz von Zwischenhülsen 7 geeignet. Z.B. bei Einsatz einer Senkkopfschrube, welche sich an der Oberseite der Unterlegscheibe noch einführen läßt, ergibt sich eine ausgezeichnete reibungsschlüssige Verbindung gegenüber der Unterlegscheibe. Bei weiterem Eindrehen der Schraube gelangt der Kopf derselben in den immer weiter sich verjüngenden Bereich der Durchgangsöffnung, so daß sich die gegenseitige Reibung wesentlich erhöht. Es ist dadurch auch eine zusätzliche Sicherheit gegen ein selbsttätiges Lösen der Schraubverbindung gegeben.

Bei der Ausführung nach Fig. 7 verjüngt sich die Wand 11 der Durchgangsöffnung 10 mit einem Öffnungswinkel von annähernd 90° in Einschraubrichtung. Durch eine solche Möglichkeit kann beispielsweise eine Senkkopfschraube eingesetzt werden, wobei zur Erhöhung der gegenseitigen Reibung beispielsweise die Unterste des Schraubenkopfes mit einer Riffelung versehen werden kann. Bei der Ausbildung nach Fig.8 ist die Durchgangsöffnung 10 von einer zweifach abgestuften Wand 11 begrenzt, die praktisch eine Kombination der Ausführungen nach den Fig. 3 und 7 sein könnte. Es erfolgt hier also eine entsprechende Anpassung an eine bestimmte Form eines Schraubenkopfes bzw. eines entsprechenden Endteiles einer Zwischenhülse 7. Die Ausführung nach Fig. 9 ist praktisch in Form und Ausführung gleich der Konstruktion nach Fig. 3, wobei jedoch der untere Rand 12 der Wand 11 knapp oberhalb der Anlageebene 13 des umlaufenden Randbereich 8 liegt.

Eine weitere Ausführungsfrom einer Unterlegscheibe ist den Fig. 10 und 11 zu entnehmen. Hier ist die abgestufte, die Durchgangsöffnung begrenzende Wand 11 in Einschraubrichtung gesehen aus einem ersten Abschnitt 14 mit quer zur Einschraubrichtung gesehen quadratischer Querschnittsform und einem zweiten Abschnitt 15 mit kreisförmiger Querschnittsform ausgeführt. Bei einer solchen Ausgestaltung wird beispielsweise ein in Draufsicht quadratischer Schraubenkopf eingesetzt, an den sich dann der zylindrische Schaft anschließt. Auch eine in gleicher Weise ausgebildete Zwischenhülse 7 könnte eingesetzt werden. Es wird dadurch eine formschlüssige Verbindung zwischen Schraube und Unterlegscheibe geschaffen, so daß die Losdrehkraft wesentlich erhöht wird, gerade infolge des großen Auflagebereiches der Unterlegscheibe 5. Dieser erste Abschnitt 14 kann jede mögliche Querschnittsform aufweisen, also drei- oder vierekkig ausgeführt werden oder beispielsweise unrund, wie etwa ellipsenförmig.

Die Ausführungen nach den Fig. 12 und 13 zeigen lediglich Draufsichten auf Unterlegscheiben, welche eine quadratische bzw. kreisförmige Umfangsform aufweisen. Diese Ausgestaltungen könnten auf alle in den Fig. 3 sowie 5 bis 10 ausgeführten Querschnittsformen zutreffen.

Die Unterlegscheibe wird zweckmäßig aus einem Metallblech gestanzt und geprägt, also einstückig ausgeführt. Es wäre aber auch denkbar, die erfindungsgemäße Unterlegscheibe beispielsweise aus einem Hartkunststoff bzw. aus einem faserbewehrten Kunststoff zu fertigen.

Bei normalen Lastannahmen, die von Land zu Land unterschiedlich sind, kann die erzielte Formstabilität der erfindungsgemäßen Unterlegscheibe dazu verwendet werden, längere, einstückige Teile zu fertigen. Damit können mehr Befestigungsmittel pro Unterlegscheibe angeordnet werden, womit eine sozusagen lineare Befestigung schienengleich möglich wird. Dies würde eine ideale Ergänzung für die Perimeterbefestigung darstellen, bei der hohe Befestigerdichten gefordert werden, um dynamische Lasten sicher aufnehmen zu können.

Durch die erfindungsgemäße Unterlegscheibe wird eine derartige Versteifung erzielt, daß auch eine Auffaltsicherheit derselben gegeben ist, ohne daß eine zusätzliche Verrippung notwendig ist. Eine Verrippung führt meist zu einer Vorprägung und einem vorzeitigen Auffalten der Unterlegscheibe. Daneben bieten Verrippungen immer Sammelpunkte für Quellschweißmittel, welche Unsicherheiten der Bindung der Dachbahn bedeuten. Wird mit Heißluft geschweißt, sollte die Aufdickung der Unterlegscheibe, insbesondere im Randbereich so gering wie möglich sein. Auch dieser Forderung trägt die erfindungsgemäße Unterlegscheibe Rechnung. Der umlaufende Randbereich ist bei der erfindungsgemäßen Unterlegscheibe lediglich der Materialstärke der Unterlegscheibe entsprechend bemessen.

Die einfache Durchwölbung als Maßnahme zur Versteifung ermöglicht die Vereinzelung in magazinierten Geräten mühelos.

## Ansprüche

1. Unterlegscheibe mit einer mittigen Durchgangsöffnung zur Aufnahme einer Schraube, insbesondere zur Befestigung ein- oder mehrschichtiger Dachbahnen samt einer Isolierschicht auf einem festen Unterbau, dadurch gekennzeichnet, daß sie umlaufend - wie an sich bekannt - einen ebenen Randbereich (8) aufweist, an den ein nach oben konvex gewölbter Abschnitt mit der mittigen Durchgangsöffnung (10) anschließt, welche von einer konisch sich verjüngenden oder ein- oder mehrfach abgestuften Wand (11) begrenzt ist.

2. Unterlegscheibe nach Anspruch 1, dadurch gekennzeichnet, daß der ebene Randbereich (8) und der untere, freie Rand (12) der die Durchgangsöffnung (10) einschließenden Wand (11) in einer Ebene (13) liegen.

3. Unterlegscheibe nach Anspruch 1, dadurch gekennzeichnet, daß der untere, freie Rand (12) der die Durchgangsöffnung (10) einschließenden Wand (11) oberhalb der vom ebenen Randbereich (8) gebildeten Anlageebene (13) liegt.

4. Unterlegscheibe nach Anspruch 1, dadurch gekennzeichnet, daß der Querschnitt des nach oben konvex gewölbten Abschnittes (9) die Form eines Kreisbogenabschnittes besitzt.

5. Unterlegscheibe nach Anspruch 1, dadurch gekennzeichnet, daß der Querschnitt des nach oben konvex gewölbten Abschnittes (9) die Form eines Ellipsen-, Parabel- oder Hyperbelbogenabschnittes aufweist.

6. Unterlegscheibe nach den Ansprüchen 1 bis 3, dadurch gekennzeichnet, daß der Querschnitt der von der Wand (11) begrenzten Durchgangsöffnung (10) der Kopfform der einzusetzenden Schraube (6) entsprechend ausgeführt ist.

7. Unterlegscheibe nach den Ansprüchen 1 bis 3, dadurch gekennzeichnet, daß sich die die Durchgangsöffnung (10) begrezende Wand (11) konisch mit einem Öffnungswinkel von 10 bis 30°, vorzugsweise 20° in Einschraubrichtung verjüngt.

8. Unterlegscheibe nach den Ansprüchen 1 bis 3, dadurch gekennzeichnet, daß sich die die Durchgangsöffnung (10) begrenzende Wand (11) konisch mit einem Öffnungswinkel von annähernd 90° in Einschraubrichtung verjüngt.

9. Unterlegscheibe nach den Ansprüchen 1 bis 3 und 6 bis 8, dadurch gekennzeichnet, daß die abgestufte, die Durchgangsöffnung (10) begrezende Wand (11) aus einem - in Einschraubrichtung gesehen - ersten Abschnitt (14) mit drei- oder mehreckiger oder unrunder Querschnittssform und einem zweiten Abschnitt (15) mit kreisförmiger Querschnittsform ausgeführt ist (Fig. 10, Fig. 11).

10. Unterlegscheibe nach Anspruch 1 und einem der vorhergehenden Ansprüche, dadurch gekennzeichnet, daß diese als streifenförmiger Bauteil mit beidendigem, halbkreisförmigem Abschluß ausgeführt ist, wobei der Radius (R) des konvex gewölbten Abschnittes (9) in allen durch die Einschraubachse geführten Schnittebenen gleichbleibend ist.

EP 0 307 647 A1

SFS Stadler AG

Fig.1

Fig.2

HE 9757

SFS Stadler AG.

Fig.3

Fig.5

Fig.4

Fig.6

Fig.7

Fig.8

Fig.9

HE 9757

SFS Stadler AG.

Fig. 10

Fig. 11

Fig. 12

Fig. 13

HE 9757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X<br>L | WO-A-8 805 487 (SFS STADLER)<br>* Seite 4, Zeilen 23-34; Seite 5, Zeilen 1,2,26-33; Seite 6, Zeilen 1,24-32; Seite 13, Zeilen 32,33; Seite 14, Zeile 1; Ansprüche 7,8; Figuren 1,2,4,5,6,17,21 * (Von Interesse für den Prioritätsanspruch) | 1,2,6 | E 04 D 5/14<br>E 04 D 3/36<br>E 04 F 13/08 |
| A | | 4,9,10 | |
| X | US-A-4 467 581 (FRANCOVITCH)<br>* Spalte 2, Zeilen 41-57; Spalte 3, Zeilen 1-33; Figuren 1-6 * | 1,3 | |
| A | | 7 | |
| A | US-A-2 334 406 (GRAY)<br>* Spalte 1, Zeilen 41-52; Figuren 1-4 * | 1,4,5 | |

RECHERCHIERTE SACHGEBIETE (Int. Cl.4)

E 04 D

Der vorliegende Recherchenbericht wurde für alle Patentansprüche erstellt

| Recherchenort | Abschlußdatum der Recherche | Prüfer |
|---|---|---|
| DEN HAAG | 02-12-1988 | HENDRICKX X. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................................................
& : Mitglied der gleichen Patentfamilie, übereinstimmendes
    Dokument

EPO FORM 1503 03.82 (P0403)